# EUROPEAN PATENT SPECIFICATION

(11) **EP 2 906 091 B1**
(45) Date of publication and mention of the grant of the patent: **26.12.2018**
(21) Application number: 13766558.4
(22) Date of filing: 27.09.2013
(51) Int. Cl.: A47J 31/36

(54) **BEVERAGE PREPARATION MACHINE WITH CAPSULE SIZE DETECTION**
GETRÄNKEMASCHINE
MACHINE POUR PRÉPARER DES BOISSONS

(30) Priority: 09.10.2012 EP 12187762
(43) Date of publication of application: 19.08.2015
(73) Proprietor: Nestec S.A., 1800 Vevey (CH)
(72) Inventor: FLICK, Jean-Marc, 1405 Pomy (CH)
(74) Representative: Sacroug, Olivier
(86) International application number: PCT/EP2013/070167
(87) International publication number: WO 2014/056730

(56) References cited:
- EP-A1- 1 000 574
- EP-A1- 2 071 986
- EP-A1- 2 409 608
- WO-A1-2008/113459
- WO-A1-2012/020343
- WO-A1-2012/126971
- US-A1- 2005 183 581

## Description

### Field of the invention

The invention pertains to the field of the beverage preparation systems, in particular using capsules of different types containing an ingredient for preparing a beverage. More particularly, the invention relates to a machine providing an efficient, automated and safe solution to handle capsules of different dimensions.

For the purpose of the present description, a "beverage" is meant to include any human-consumable liquid substance, such as coffee, tea, hot or cold chocolate, milk, soup, baby food or the like. A "capsule" is meant to include any pre-portioned beverage ingredient or combination of ingredients (hereafter called "ingredient") within an enclosing packaging of any suitable material such as plastic, aluminium, a recyclable and/or bio-degradable material and combinations thereof, including a soft pod or a rigid cartridge containing the ingredient.

### Technical background

Certain beverage preparation machines use capsules containing an ingredient to be extracted or to be dissolved and/or an ingredient that is stored and dosed automatically in the machine or else is added at the time of preparation of the drink. Some beverage machines possess liquid filling means that include a pump for liquid, usually water, which pumps the liquid from a source of water that is cold or indeed heated through heating means, e.g. a thermoblock or the like.

Especially in the field of coffee preparation, machines have been widely developed in which a capsule containing a beverage ingredient is inserted in a brewing device. The brewing device is tightly closed about the capsule, water is injected at the first face of the capsule, the beverage is produced in the confined volume of the capsule and a brewed beverage can be drained from a second face of the capsule and collected into a receptacle such as a cup or glass.

Brewing devices have been developed to facilitate insertion of a capsule into the chamber, for instance, by using a feeding arrangement or a motorized brewing unit.

WO 01/84993 relates to a beverage machine with a movable drawer sliding horizontally to bring a capsule from a loading stated to an inserted position in a motorized brewing unit. Such machine allows automating tasks like the introduction of a capsule into the brewing unit or the preparation of a plurality of beverages. However, for triggering the preparation of the beverage, the user has still to either activate manually the movable drawer sliding and/or press a start button.

WO 2012/010470 discloses a mechanical device for sensing the size of a capsule inserted in a receptacle of a beverage preparation machine. Further relevant state of the art documents are for example: EP 2 409 608, EP 2 071 986, WO 2012 / 126971, WO 2012 / 020343, WO 2008 / 113 459.

Furthermore, it is also desirable to propose a beverage preparation systems capable of handling a variety of different capsules, for example capsules containing different volume of ingredient(s) to prepare different volumes of beverage and/or beverage of different type and/or beverage prepared using different recipes, with semi-automatic or automatic preparation modes.

However, having different types of capsules raises several issues, notably the increase of the complexity of the user interface and also the cost and complexity of the machine. Furthermore, even if enhancing the user's interactions with the machine by increasing the level of automation is highly desirable, it usually comes along with safety issues, caused notably by moving parts actuated automatically by motors. In the field of the motorized beverage machines, it has been provided solutions to prevent or limit the risks of the insertion of inappropriate objects into the brewing chamber, like a finger or a spoon, which may cause damages to the machine and injuries to the user when the brewing unit is closed. For instance, EP1767129 relates to a beverage machine comprising a motorized brewing unit in which the capsule is inserted manually by gravity in an open passage between the jaw members of the unit. For safety reason, the passage can be blocked by a motorized closing gate.

However, there is still a need to propose a beverage preparation system capable of handling a variety of different capsules without decreasing the convenience of use of such a system by the user, without decreasing the safety level, and in a cost-efficient and reliable way.

### Summary of the invention

An object of the invention is to provide more convenience, less user's intervention and more safety in the way of inserting capsules of different types in the machine. Another object is to provide added value functionalities such as use of capsules containing different volume of ingredient(s) to prepare beverages of different strengths, volumes or types and/or beverage prepared using different recipes, with semi-automatic or automatic preparation modes. Another object is to control optimal conditions for preparing a beverage.

One or more of these objects are met by a machine according to the independent claim(s). The dependent claims further provide solutions to these objects and/or additional benefits.

More particularly, according to a first aspect, the invention relates to a beverage preparation machine having an ingredient processing module adapted to use for preparing beverages capsules of a first type having a first size and capsules of a second type having a second size. The machine comprises a positioner adapted to hold a capsule of the first and the second type. The beverage preparation machine further comprises a size sensing arrangement configured to:
- detect a presence of a capsule in the positioner;
- determine a size information by differentiating a size of said detected capsule and comparing said measured size to the first and the second size;
- send the size information to the ingredient processing module.

In particular, the first and the second type of capsules have different dimensions and/or volumes for containing the ingredient. The machine may be adapted to handle more than two types of capsules of different sizes.

Consequently, the user has only to put a capsule of the first or the second type in the positioner for preparing a beverage. This simple, quick and intuitive gesture does not require the user to provide the information of the type of capsule he has chosen. The ingredient processing module, knowing the type of capsule that the user has positioned into the positioner, can use this information for adapting/configuring itself for handling this kind of capsule, and/or to adapt the preparation process according to this information, for example by adjusting the volume of water used according to the type of capsule. Moreover, the positioner can be placed outside the ingredient processing module, in particular outside a brewing unit of the ingredient processing module, and preferably in a position where it is visible and accessible to the user, so that the latter may have a visual feedback. Consequently, if an object is placed into the positioner and is not detected as a capsule, the user can more easily extract it away from the positioner before this object is introduced in the brewing unit. The level of safety of the machine is improved and certain sensitive functionalities of the machine, such as its motorized closure system, is less prone to damages or failures due to inappropriate objects being inserted in the brewing unit.

In particular, the size sensing arrangement may be adapted to detect the presence of a capsule in the positioner by receiving or reading information from the capsule, and/or by measuring at least one of the following characteristic of the capsule: spectral property, colour, electrical property, resistivity, capacitance, electromagnetic property, magnetic induced field, mechanical property, geometry, weight, identifying information, code bar, emitted or reflected signal.

In particular, the size sensing arrangement may be configured to detect the presence of a capsule in the positioner by detecting if a metallic object is present in the positioner.

The size sensing arrangement may comprise an inductive detection arrangement configured to detect a presence of a capsule in the positioner by producing with a sensing element an electro-magnetical field in the positioner and by detecting variations of said electro-magnetical field induced by the presence of a capsule of the first or the second type.

The *size* sensing arrangement may comprise a length-detection unit for determining the size information. In an embodiment the length-detection unit comprises a light-receiving device and a light-emitting device, both positioned in the capsule positioner so as that:
- a light, emitted by the light-emitting device, is reflected by a capsule of the second type when such a capsule is positioned in the positioner, and is being received by the light-receiving device;
- a light, emitted by the light-emitting device, is not reflected by a capsule of the first type when such capsule is positioned in the positioner, and/or is not being received by the light-receiving device.

In an embodiment, the size sensing arrangement may comprises a size-detection arrangement configured to determine the size information by determining a profile and/or a curvature and/or a shape of a part of a capsule positioned in the positioner, using a geometrical size sensing element for identifying whether said profile and/or said curvature and/or said shape correspond(s) to a part of a capsule of the first type or to a part of a capsule of the second type.

More particularly, the size sensing arrangement may comprise an inductive size-detection arrangement configured to determine the size information by producing with a size sensing element an electro-magnetical field in the positioner and by detecting variations of said electro-magnetical field induced by the presence of a capsule of the first or the second type, and by identifying whether said variations are induced by a capsule of the first type or by a capsule of the second type. For example, the inductive size-detection arrangement may comprise a field emitting element for producing an electro-magnetical field in the positioner, and a first field receiving element and a second field receiving element, the inductive size-detection arrangement being configured to determine the size information by producing with the field emitting element an electro-magnetical field in the positioner and by detecting variations of said electro-magnetical field observed on the first and the second field receiving element induced by the presence of a capsule of the first or the second type, and by identifying whether said variations are induced by a capsule of the first type or by a capsule of the second type.

The ingredient processing module may be configured to prepare a beverage according to parameters adapted to, or depending of, the size information.

More particularly, the ingredient processing module may comprise assemblies configured to allow the insertion of a capsule of the first or the second type in an opened position, and to provide a brewing chamber in a closed position, the ingredient processing module being configured to adapt the configuration of the assemblies and/or of the brewing chamber according to the size information.

The positioner may be adapted to hold a capsule of the first or the second type out of the ingredient processing module, the machine comprising transfer means configured to transfer the capsule to the ingredient processing module. The positioner may be positioned relatively to a passage to a preparation chamber of the ingredient processing module so as to allow the capsule to be transferred, into the ingredient processing module at least partially under the action of the gravity force. The transfer means may comprise only guiding means for guiding the capsule. In particular, the positioner may be positioned above the ingredient processing module and the passage, for instance, on top of the housing of the machine, to benefit from the action of the gravity.

According to a second aspect, the invention relates to a method in a beverage preparation machine according to the first aspect. The method comprises the following steps:
- detecting a presence of a capsule in the positioner;
- determining a size information by measuring a size of said detected capsule and comparing said measured size to the first and the second size;
- sending the size information to the ingredient processing module.

According to a third aspect, the invention relates to the use of a capsule of a first type having a first size and/or a capsule of a second type having a second size with a beverage preparation machine according to the first aspect, for preparing a beverage.

According to a fourth aspect, the invention relates to a kit comprising a capsule of a first type having a first size and/or a capsule of a second type having a second size, and a beverage preparation machine according to the first aspect.

### Brief description of the drawings

The invention will now be described with reference to the schematic drawings, wherein:
- Figure 1 is a schematic view of a beverage machine according to an embodiment;
- Figures 2a, 2b are cross sections of a capsule of the first type and of a capsule of the second type, both adapted to be used by the beverage machine to prepare a beverage;
- Figure 3a, 3b, 3c is a partial cross section perspective representation of a brewing unit of the beverage machine of figure 1 in open position;
- Figure 3b shows a partial cross section perspective representation of a closed brewing unit of the beverage machine of figure 1 in an "empty closure mode";
- Figure 3c shows a partial cross section perspective representation of a closed brewing unit of the beverage machine of figure 1 in a "capsule closure mode";
- Figure 4a, 4b, 4c, 4d, 4e are detailed views of a capsule positioner of the beverage machine of figure 1, according to an embodiment;
- Figure 4b is a detailed view of a capsule positioner of the beverage machine of figure 1, in an open position, , according to a first embodiment;
- Figures 5a, 5b, show a view of a capsule size detection arrangement assembled in a capsule positioner, according to a first embodiment;
- Figures 6a, 6b, show a view of a capsule size detection arrangement assembled in a capsule positioner, according to a second embodiment;
- Figures 7a, 7b show a view of a capsule size detection arrangement assembled in a capsule positioner, according to a third embodiment;
- Figures 8 show a diagram of the measurements performed by the capsule size detection arrangement according to the third embodiment when no capsule are positioned in the positioner; when a capsule of the first type is positioned in the positioner; when a capsule of the second type is positioned in the positioner;
- Figure 9 is a schematic overview of a MEMS sensor embed in the capsule size detection arrangement, according to a third embodiment;
- Figure 10 is a block diagram of a method according to an embodiment.

### Detailed description of the invention

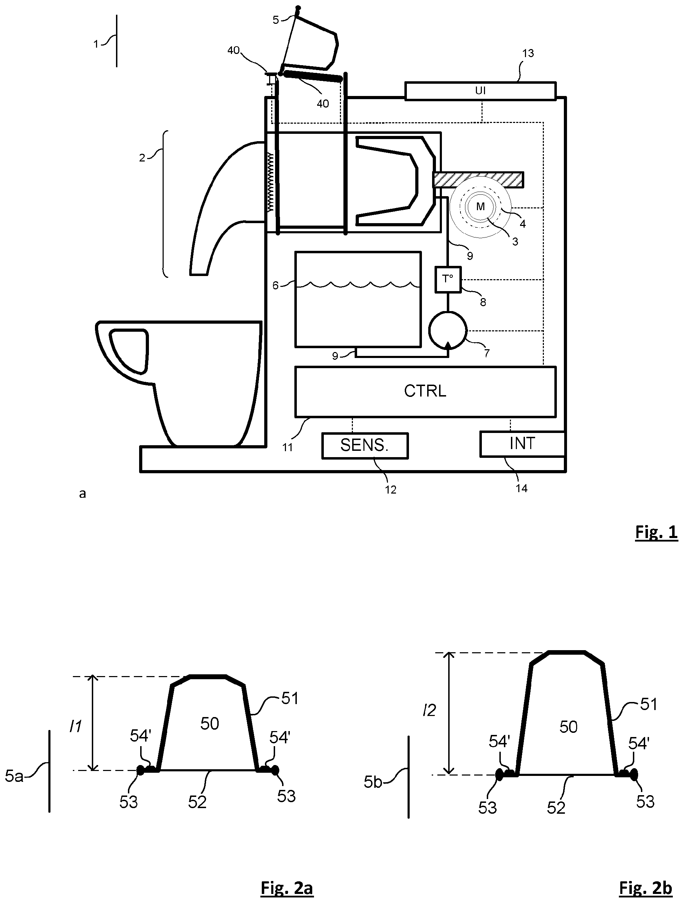

A beverage machine **1** according to an embodiment is illustrated schematically on figure 1. The beverage machine comprises a brewing unit **2** which is coupled with an electrical motor 3 driving transmission means **4** for moving the brewing unit between an opened and a closed position. The brewing unit is represented in the opened position on figure 1. The brewing unit allows the preparation of a beverage from a capsule **5** containing at least one ingredient, e.g. ground coffee or tea or chocolate.

As shown in Figures 2a and 2b, the capsule has a generally cup-shaped body **51** and a lid such as a covering membrane **52.** Membrane is assembled to cup along a peripheral rim **54** of cup. The rim may comprise a seal **54**', e.g. made of elastomeric or plastic material, for improving the fluid-tight engagement of the capsule in the brewing unit. Furthermore, the capsule in particular the rim and/or the membrane may bear a ring or toroid **53**, e.g. for assisting manufacturing and/or handling of the capsule. Such capsule forms a packaging for containing an ingredient **50**, e.g. ground coffee, of a beverage to be prepared with the beverage preparation machine. In an embodiment, the capsule forms a gastight packaging, e.g. made of aluminium or an aluminium-alloy. Alternatively, the capsule may be more or less pervious, e.g. perforated and/or made of organic, in particular plastic material, e.g. biodegradable material. The capsule's cup and/or the capsule's lid may be made of a monolithic material, e.g. a metallic material or a conductive ceramic and/or conducive organic material, or may be made of a structure covered or containing a conductive material, e.g. a conductive coating or track, e.g. an aluminium, iron and/or copper coating or track. On Figure 2a, there is shown therein a first type of the capsule 5 wherein the packaging for containing the ingredient **50** has a maximum first length l1 along its axis of symmetry. In particular, the first type of the capsule 5 may comprise a first volume V1 of the ingredient **50.** On Figure 2b, there is shown therein a second type of the capsule 5 wherein the packaging for containing the ingredient **50** has a maximum second length l2 along its axis of symmetry. The maximum second length l2 is longer than the maximum first length l1. In particular, the second type of the capsule 5 may comprise a second volume V2 of the ingredient 50. In the embodiment represented on the Figures 2a and 2b, the second volume V2 is bigger than the first volume V1.

As represented on Figure 1, water supply means are also provided as a part of the machine, such means including a water reservoir **6**, a water pump **7** and a water heater **8.** Water circulates in a water circuit **9** which is linked to the brewing unit. Controller is also provided in the machine. The controller includes typically a control unit **11**, sensors **12** and a user interface **13.** The control unit includes processor(s), memories and programs enabling to provide appropriate inputs to and receive outputs from the different activation means of the machine in particular, the pump, heater, motor and user interface.

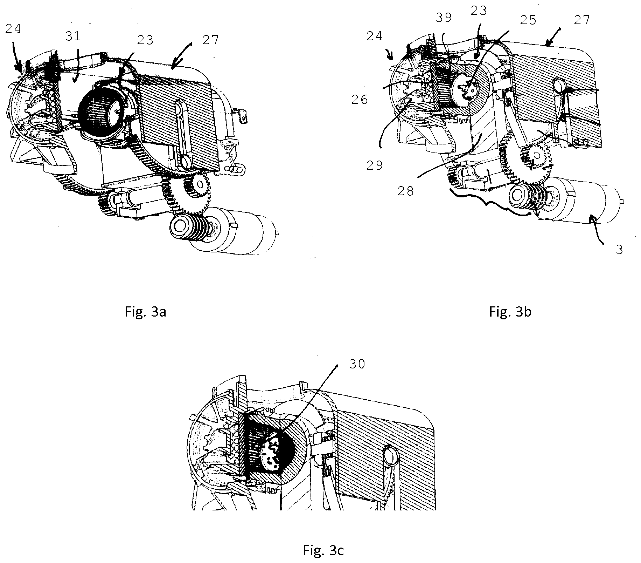

Referring now to figures **3a**, **3b**, and **3c**, there is shown therein an exemplary motorized embodiment of the brewing unit. The brewing unit more particularly comprises a first assembly **23** and a second assembly **24** which are movable relatively one another. In this particular mode, the rear injection assembly **23** represents the capsule cage including injection blades **25.** The front assembly **24** represents the beverage delivery assembly and includes a capsule delivery plate **26.** The front assembly is associated to an outer casing **27** and the whole is movable relatively to the rear injection assembly **23** which remains fixed to a frame **28.** The front delivery assembly **24** comprises a beverage outlet **29.** The front delivery assembly **24** is moved relatively to the rear injection assembly **23** by means of the motor **3** which drives the transmission means **4.** In the opened position (figure 3b), a passage 31 is provided between the first and second assemblies **23**, **24** for allowing the insertion of a capsule. In the closed position (figure **3c**), a brewing chamber **39** is provided.

The beverage machine further comprises a capsule positioner **40** having a seat adapted to receive at least the first type and the second type of the capsule 5 out of the brewing chamber, and preferably outside the brewing unit. In an embodiment, the positioner is arranged to store at least a second capsule, out of the brewing chamber, and preferably outside the brewing unit. The capsule positioner may comprise a closing apparatus operable for switching the capsule holder between at least an opened position and a closed position. In the closed position, the capsule holder is configured to store the capsule in the seat. In the opened position, the capsule holder is configured to allow a capsule, pre-positioned into the capsule seat, entering the brewing unit chamber. More particularly, the capsule positioner is arranged so as to allow a capsule entering and passing through the passage of the brewing unit before reaching the capsule chamber, when the capsule positioner is set in its opened position. The capsule may be transferred from the capsule positioner in the opened position to the brewing unit by transfer means such guiding means, motorized elements, moving parts, actuators and/or any other means adapted to move the capsule out of the seat to the brewing unit, and in particular to the brewing unit chamber. Advantageously, the closing apparatus is arranged to close at least partially the passage when the capsule positioner is in its closed position, notably in order to prevent the unsafe entry of an unexpected object into the brewing unit.

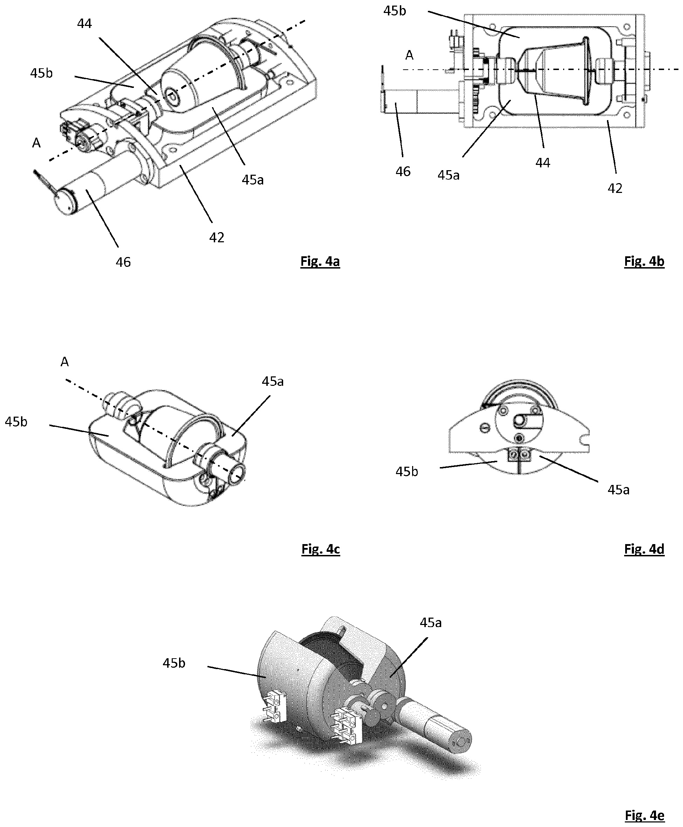

In a first embodiment, as shown in figures 4a, 4b, 4c, 4d and 4e, the capsule seat 44 is formed in a housing 42 that may be integrated to the housing of the beverage machine (not represented on the drawings). Alternatively, the capsule seat may be a separate part mounted on the housing of the beverage machine (not represented on the drawings). In the first embodiment, the closing apparatus comprises two movable shells forming the base of the capsule seat when the closing apparatus is in a closed position. The two movable shells 45 may be provided with notches for guiding the introduction and the positioning of a capsule into said seat 44. In particular, the shells may be displaced by a motorized mechanism 46 to switch the closing apparatus between the closed (represented on Fig. 4a, 4b, 4c, 4d) and the opened position (represented on Fig. 4e). More particularly, each shell may be rotated along a longitudinal axis A by the motorized mechanism 46 to space apart each shell so as to allow the capsule to be released from the seat, for example by allowing the capsule to fall down into the brewing unit through the passage. When the capsule positioner is opened, for example when the shells are spaced apart as illustrated on Figure 4e, the closing apparatus is configured to authorize a capsule positioned onto the capsule seat 44 to leave the capsule seat. In particular, the capsule positioner 40 is positioned on the upper part of the housing of the beverage machine to let a capsule falling into the passage 31 under the action of the gravity force, when the capsule positioner is opened. Alternatively, the shells may be mechanically linked by a mechanical coupling means with the brewing unit, and in particular with the first assembly 23 and/or the second assembly 24, so as to switch between the opened and closed positions depending on whether the brewing unit is opened or closed. For instance, the mechanical coupling means may be arranged to open the closing apparatus when the brewing unit is in the opened position, and to close the closing apparatus otherwise. The guides formed into the shells and surrounding the capsule seat, are disposed to ease the positioning of a capsule by a user when the capsule positioner is in the closed position, and/or to improve the holding of a capsule in the seat. Moreover, the guides may be arranged to guide the movement of the capsule when the capsule positioner is switched to its opened position, and to prevent a capsule inserted into the seat to be translated with the closing apparatus, for example when the capsule holder is switched from the closed to the opened position.

The beverage machine comprises a capsule-length detector. The capsule detector is adapted to detect the presence onto the capsule seat of a capsule and to identify whether said detected capsule is of the first or the second type. More particularly, the capsule-length detector may be configured to determine the type of the capsule according to the length of said capsule. For example, the capsule-length detector may be configured to detect the presence of a metallic capsule into the seat, and then, to determine if the detected capsule is of the first type or the second type by checking if the maximum length of said capsule along its axis of symmetry is sensibly equal to the first length L1 or to the second length L2.

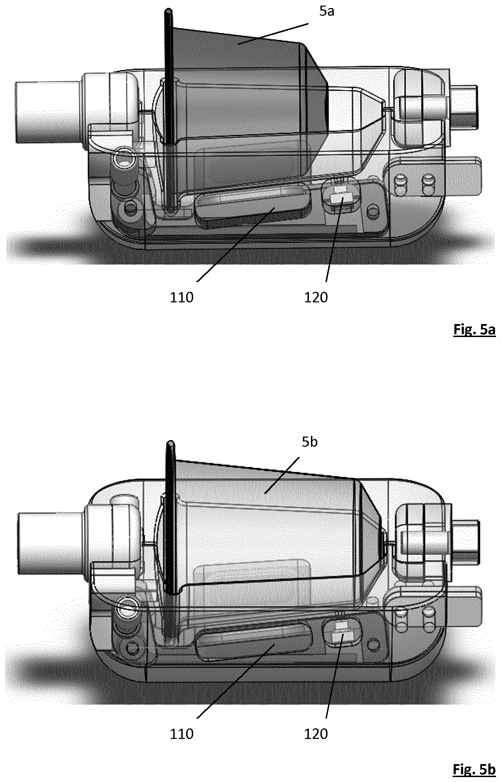

Referring to figures 5a and 5b, there is shown therein a first embodiment of the capsule-size detector. The capsule-size detector comprises a detection unit 110 adapted to detect the presence onto the capsule seat of a capsule, and a type detection unit adapted to identify whether said detected capsule is of the first or the second type. In particular, for a beverage preparation system designed to handle metallic capsules, for example capsules made of aluminium or of an aluminium-alloy, or of a metallic and/or magnetically-responsive material, the detection unit may comprise an inductive detection arrangement to detect the presence of a capsule into the seat. In the embodiment illustrated on Figures 5a and 5b, the inductive detection arrangement comprising a sensing element having two electrical coils positioned respectively on each shell 45a, 45b, facing each over. The electrical coils are arranged so as to be placed sensibly tangentially relatively to the wall of the body of a capsule of the first or second type, when said capsule is positioned into the seat. The detection unit 110 is configured to excite the sensing element, with a modulated electrical signal having a reference frequency F1. The detection unit 110 comprises a frequency-shift detector configured to detect and to measure a frequency shift DF1 of the reference frequency F1, observed on the sensing element. When there is no capsule in the seat, the frequency shift DF1 is sensibly equal to zero. When a capsule is positioned into the seat, the frequency shift DF1 is greater than a given threshold T1, said threshold T1 being greater than zero. The threshold T1 is typically linked to the characteristics of the capsule, in particular its shape and the electro-magnetical properties of its material. The detection unit 110 comprises a comparator configured to compare the frequency shift DF1 to the threshold T1. The detection unit is configured to send a signal of the detection of a capsule, if the frequency shift DF1 is equal or greater than the threshold T1. The capsule-size detector 50 comprises a length-detection unit 120. The length-detection unit 120 is used by the capsule-size detector 50 in particular when the signal of the detection of a capsule has been sent by the detection unit. The length-detection unit 120 is positioned so as to detect whether a capsule of the first type (5a) or a capsule of the second type (5b) is positioned in the positioner, by measuring a size of said detected capsule. In an embodiment, the length-detection unit 120 comprises a light-receiving device and a light-emitting device, both positioned in the capsule positioner 40 so as:
- a light, emitted by the light-emitting device, is reflected by a capsule of the second type when said capsule is positioned in the positioner 40, said reflected light being received by the light-receiving device, as represented on Figure 5b;
- a light, emitted by the light-emitting device, is not reflected by a capsule of the first type when said capsule is positioned in the positioner 40, said reflected light being not received by the light-receiving device, as represented on Figure 5a.

In particular, the light-receiving device and the light-emitting device may be arranged to emit and receive infrared lights. One possible configuration of the length-detection unit adapted for detecting whether the detected capsule is of the first or of the second type, is illustrated on Figure 5a and Figure 5b. The two movable shells 45 of the capsule positioner are provided with notches for guiding the introduction and the positioning of a capsule into said seat 44 so that whatever the type of the inserted capsule, its membrane is positioned sensibly in the same plane P and that the longitudinal axis A of symmetry of said capsule extends sensibly in the same direction. The light-emitting device of the length-detection unit is arranged to emit a light, at a point L, sensibly in a direction perpendicular to the lateral wall of a capsule positioned in the positioner. The point L is positioned at a distance D of the plane P greater than the maximum first length 11, as represented on Figure 5a. The distance D is also inferior to the maximum second length 12, as represented on Figure 5b.

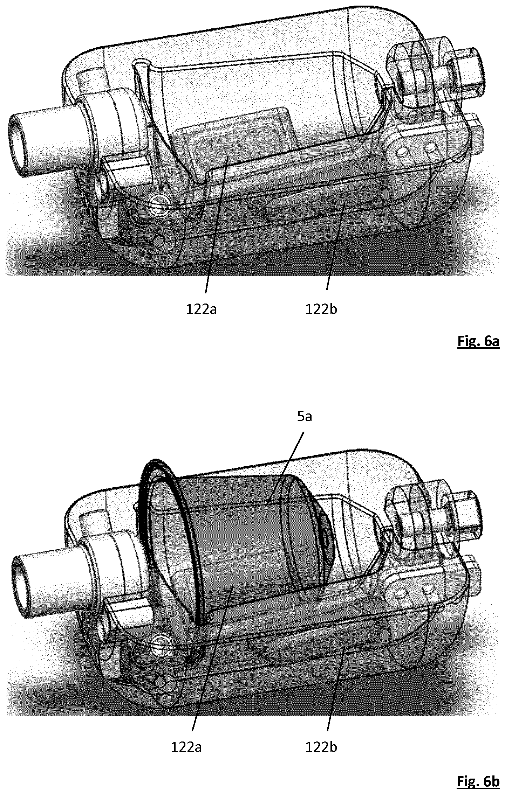

Referring to figures 6a and 6b, there is shown therein a second embodiment of the capsule-size detector 50. The capsule-size detector 50 comprises a detection and size-detection unit adapted to detect the presence in the capsule seat of a capsule, and to identify whether said detected capsule is of the first or the second type. In particular, for a beverage preparation system designed to handle metallic capsules, for example capsules made of aluminium or of an aluminium-alloy, or of a metallic and/or magnetically-responsive material, the detection and size-detection unit comprise an inductive arrangement to detect the presence of a capsule into the seat and to identify whether said detected capsule is of the first or the second type. In the embodiment illustrated on Figures 6a and 6b, the inductive detection arrangement comprising a sensing element having two electrical coils positioned respectively on each shell 45a, 45b, offset with respect to each other. The electrical coils are arranged so as to be placed sensibly tangentially relatively to the wall of the body of a capsule of the first or second type, when said capsule is positioned into the seat. One of the two electrical coils is being positioned so as to be sensibly facing the bottom base part of a capsule of the first type when said capsule is positioned into the positioner. The detection and size-detection unit 120 is configured to excite the sensing element, with a modulated electrical signal having a reference frequency F2. The detection and size-detection unit 120 comprises a frequency-shift detector configured to detect and to measure a frequency shift DF2 of the reference frequency F2, observed on the sensing element. When there is no capsule in the seat, the frequency shift DF1 is sensibly equal to zero. When a capsule of the first type is positioned into the seat, the frequency shift DF2 is greater than a given threshold T11, said threshold T11 being greater than zero. When a capsule of the second type is positioned into the seat, the frequency shift DF2 is greater than a given threshold T12, said threshold T12 being greater than zero. The threshold T11 and the threshold T12 are typically linked to the characteristics of the capsule, in particular its shape and the electro-magnetical properties of its material. The detection unit is configured to send a signal of the detection of a capsule of the first type, if the frequency shift DF2 is equal or greater than the threshold T11. The detection unit is configured to send a signal of the detection of a capsule of the second type, if the frequency shift DF2 is equal or greater than the threshold T12.

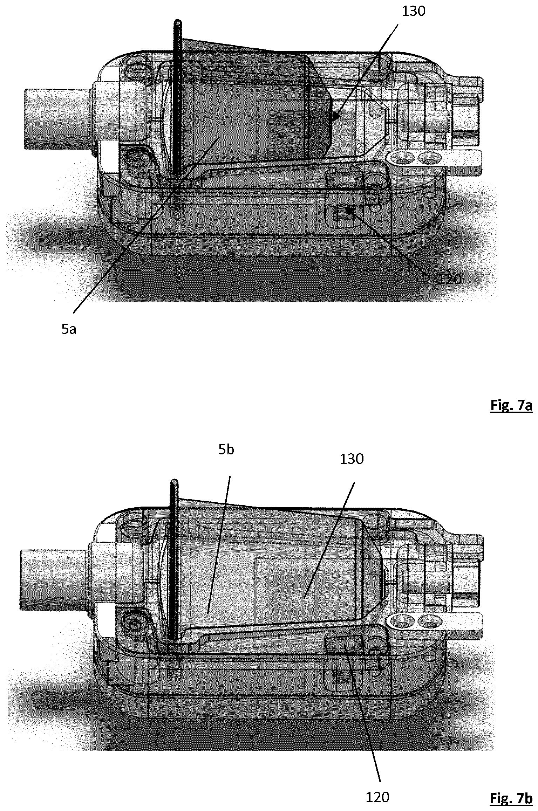

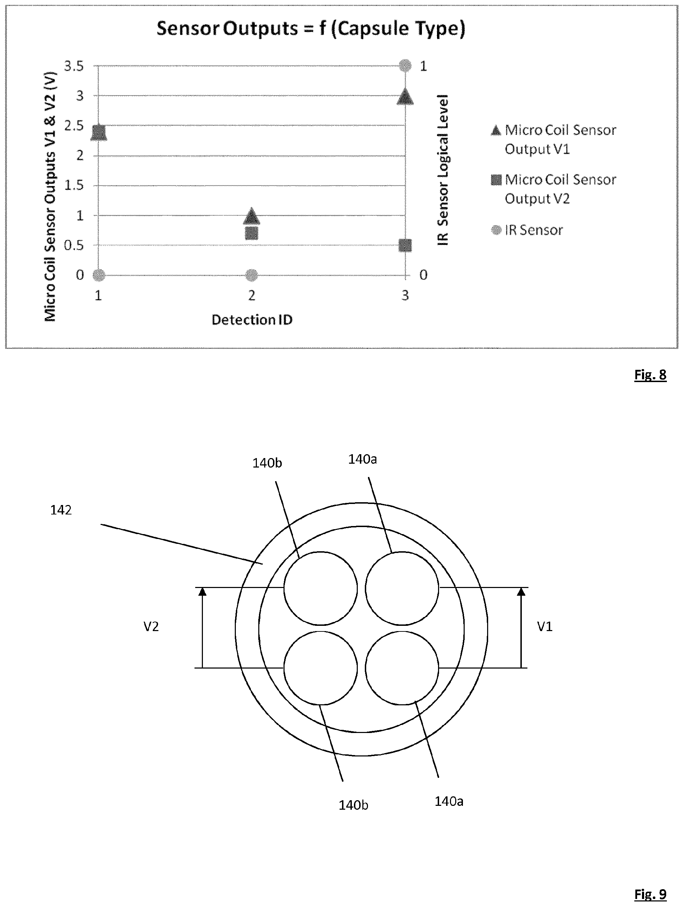

Referring to figures 7a, 7b, 8 and 9, there is shown therein a third embodiment of the capsule-size detector 50. The capsule-size detector 50 comprises a detection unit 130 adapted to detect the presence onto the capsule seat of a capsule, and a type detection unit adapted to identify whether said detected capsule is of the first or the second type. In particular, for a beverage preparation system designed to handle metallic capsules, for example capsules made of aluminium or of an aluminium-alloy, or of a metallic and/or magnetically-responsive material, the detection unit may comprise an inductive detection arrangement to detect the presence of a capsule into the seat. In the embodiment illustrated on Figures 7a and 7b, the inductive detection arrangement comprises a sensing element with a MEMS sensor 130. A schema of the MEMS sensor is schematically illustrated on Figure 9. The MEMS sensor 130 comprises an inductive circuitry on one side of a silicon chip including a primary coil 142 and two pairs 140a, 140b of secondary coils (cross or parallel configurations). The first pair 140a of the secondary coils is coupled to a first output of the MEMS sensor on which a first output signal V1 can be measured. The second pair 140b of the secondary coils is coupled to a second output of the MEMS sensor on which a second output signal V2 can be measured. The MEMS sensor can also comprise an analogue and digital electronic circuitry on the back side on the same silicon chip. The MEMS sensor comprises means for generating an electromagnetic field via the primary coil. The MEMS sensor comprises a measuring arrangement for measuring the output signals V1 and V2. More particularly, the MEMS sensor allows measuring differences between the signals V1 and V2. Hence, when a metallic piece entered the electromagnetic field generated by the MEMS sensor, said generated electromagnetic field is disturbed and the perturbation can be detected by measuring variations of the signals V1 and V2. When the MEMS sensor is configured to work in a differential mode wherein the MEMS sensor is configured to output the difference D between the signal V1 and the signal V2, a metallic piece, placed in a parallel plane of the those comprising the secondary coils, and extending similarly over the two pairs of secondary coils, the difference D will be sensibly equal to zero. By contrast, a metallic piece, placed in a non-parallel plane of the those comprising the secondary coils, and/or extending only on some part of the two pairs of secondary coils, the difference D will be sensibly different to zero. The MEMS sensor can hence be used for example to differentiate between different curvatures of metallic parts, and more specifically different curvatures of metallic part of a capsule.

In the embodiment illustrated on Figures 7a, 7b, the MEMS sensor 130 is positioned on one of the shells 45a, 45b. The plane of the MEMS sensor comprising the pairs of the secondary coils are arranged so as to be placed sensibly tangentially relatively to the wall of the body of a capsule of the first or second type, when said capsule is positioned into the seat. One possible configuration of the MEMS sensor for detecting whether the detected capsule is of the first or of the second type, is illustrated on Figure 7a and Figure 7b. The two movable shells 45 of the capsule positioner are provided with notches for guiding the introduction and the positioning of a capsule into said seat 44 so that whatever the type of the inserted capsule, its membrane is positioned sensibly in the same plane P and that the longitudinal axis A of symmetry of said capsule extends sensibly in the same direction. The MEMS sensor is arranged so as, when a capsule of the first type is placed in the positioner, a curvature of the surface of said capsule can be detected by the MEMS sensor. In particular, the MEMS sensor may be arranged so that, when a capsule of the first type is placed in the positioner, the surface of said capsule facing the first pair of the secondary coils are not co-planar to the surface of said capsule facing the second pair of the secondary coils. As represented on Figure 8 (corresponding to the detection ID equal to 1 on the axis X of the diagram), when there is no capsule in the seat, the difference D between the signal V1 and the signal V2 is sensibly equal to zero. In this example, the signal V1 and the signal V2 is sensibly equal to 2.4V. When a capsule of the first type is positioned into the seat (corresponding to the detection ID equal to 2 on the axis X of the diagram of Figure 8), the difference D is not equal to zero, sensibly equal to 0.3V, and the signal V1 is equal to 1V, the signal V2 being equal to 0.7V. When a capsule of the second type is positioned into the seat (corresponding to the detection ID equal to 3 on the axis X of the diagram of Figure 8), the difference D is not equal to zero, sensibly equal to 2.5V, and the signal V1 is equal to 3V, the signal V2 being equal to 0.5V. The MEMS sensor can then detect if a capsule is inserted in the positioner and if said capsule is of the first type or of the second type. In this embodiment, the capsule-size detector 50 may optionally comprise an additional length-detection unit 120, for example a light-receiving device and a light-emitting device, as described in the second embodiment.

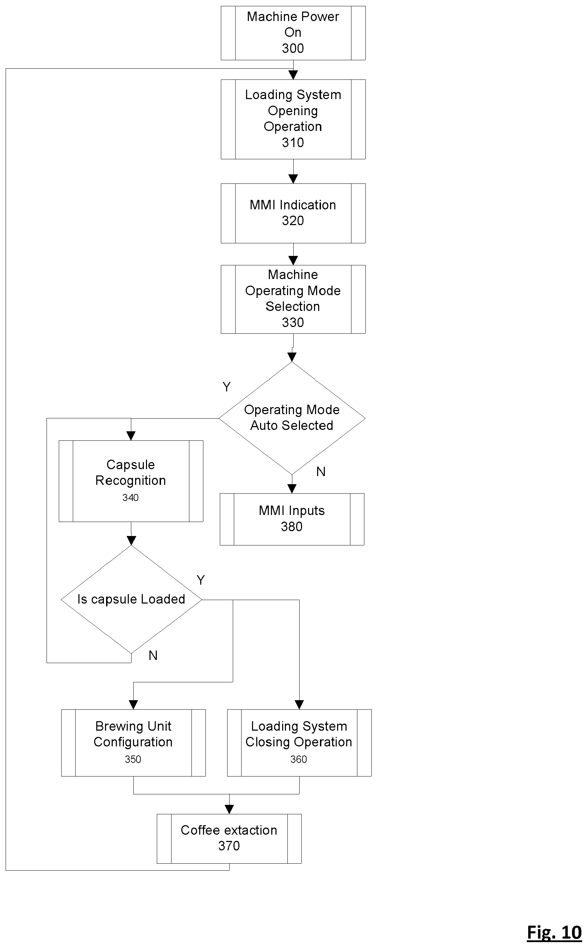

Referring to figure 10, there is shown therein steps of a method for preparing a beverage with a machine according to an embodiment. In particular, the method comprises the following steps:
- detecting a presence of a capsule in the positioner;
- determining a size information by measuring a size of said detected capsule and comparing said measured size to the first and the second size;
- sending the size information to the ingredient processing module.

## Claims

1. Beverage preparation machine having an ingredient processing module (2) adapted to use for preparing beverages capsules of a first type (5a) having a first size and capsules of a second type (5b) having a second size; said machine comprising a positioner (44) adapted to hold a capsule of the first and the second type, the beverage preparation machine further comprising a size sensing arrangement (110, 120; 122a, 122b; 130) configured to:
• detect a presence of a capsule in the positioner;
• determine a size information by differentiating a size of said detected capsule and comparing said differentiated size to the first and the second size;
• send the size information to the ingredient processing module,
**characterized in that** the ingredient processing module comprises assemblies (23, 24) configured to allow the insertion of a capsule of the first or the second type in an opened position, and to provide a brewing chamber (39) in a closed position, the ingredient processing module being configured to adapt the configuration of the assemblies and/or of the brewing chamber according to the size information.

2. Machine according to claim 1, wherein the size sensing arrangement (110) is configured to detect the presence of a capsule in the positioner by detecting if a metallic object is present in the positioner.

3. Machine according to claim 1 or 2, wherein the size sensing arrangement (110) comprises an inductive detection arrangement configured to detect the presence of a capsule in the positioner by producing with a sensing element (45a, 45b) an electro-magnetical field in the positioner and by detecting variations of said electro-magnetical field induced by the presence of a capsule of the first or the second type.

4. Machine according any one of the preceding claims, wherein the size sensing arrangement (110) comprises a length-detection unit (120) for determining the size information, the length-detection unit comprising a light-receiving device and a light-emitting device, both positioned in the capsule positioner (40) so as that:
• a light, emitted by the light-emitting device, is reflected by a capsule of the second type when such a capsule is positioned in the positioner (40), and is being received by the light-receiving device;
• a light, emitted by the light-emitting device, is not reflected by a capsule of the first type when such capsule is positioned in the positioner (40), and/or is not being received by the light-receiving device.

5. Machine according to any one of the preceding claims, wherein the size sensing arrangement (110) comprises a size-detection arrangement configured to determine the size information by determining a profile and/or a curvature and/or a shape of a part of a capsule positioned in the positioner, using a geometrical size sensing element (130, 140a, 140b) for identifying whether said profile and/or said curvature and/or said shape correspond(s) to a part of a capsule of the first type or to a part of a capsule of the second type.

6. Machine according to any one of the preceding claims, wherein the size sensing arrangement (110) comprises an inductive size-detection arrangement configured to determine the size information by producing with a size sensing element (122a, 122b; 142, 140a, 140b) an electro-magnetical field in the positioner and by detecting variations of said electro-magnetical field induced by the presence of a capsule of the first or the second type, and by identifying whether said variations are induced by a capsule of the first type or by a capsule of the second type.

7. Machine according to claim 6, wherein the inductive size-detection arrangement comprises a field emitting element (142) for producing an electro-magnetical field in the positioner, and a first field receiving element (140a) and a second field receiving element (140b), the inductive size-detection arrangement being configured to determine the size information by producing with the field emitting element (142) an electro-magnetical field in the positioner and by detecting variations of said electro-magnetical field observed on the first and the second field receiving element induced by the presence of a capsule of the first or the second type, and by identifying whether said variations are induced by a capsule of the first type or by a capsule of the second type.

8. Machine according to any one of the preceding claims, wherein the ingredient processing module is configured to prepare a beverage according to parameters adapted to, or depending of, the size information.

9. Machine according to any preceding claim, wherein the positioner is adapted to hold a capsule of the first or the second type out of the ingredient processing module, the machine comprising transfer means configured to transfer the capsule to the ingredient processing module.

10. Method for preparing a beverage in a beverage preparation machine having an ingredient processing module (2) adapted to use for preparing beverages capsules of a first type (5a) having a first size and capsules of a second type (5b) having a second size; said machine comprising a positioner (44) adapted to hold a capsule of the first or the second type, the beverage preparation machine further comprising a size sensing arrangement (110, 120; 122a, 122b; 130),
wherein the ingredient processing module comprises assemblies (23, 24) configured to allow the insertion of a capsule of the first or the second type in an opened position, and to provide a brewing chamber (39) in a closed position, the ingredient processing module being configured to adapt the configuration of the assemblies and/or of the brewing chamber according to the size information,
wherein the method comprises the following steps:
• detecting a presence of a capsule in the positioner;
• determining a size information by measuring a size of said detected capsule and comparing said measured size to the first and the second size;
• sending the size information to the ingredient processing module;
• adapting the configuration of the assemblies and/or of the brewing chamber according to the size information.

11. Use of a capsule of a first type (5a) having a first size and/or a capsule of a second type (5b) having a second size with a beverage preparation machine according to any one of claims 1 to 9 for preparing a beverage.

12. Kit comprising a capsule of a first type (5a) having a first size and/or a capsule of a second type (5b) having a second size, and a beverage preparation machine according to any one of claims 1 to 9.

## Patentansprüche

1. Getränkezubereitungsmaschine mit einem Inhaltsstoffverarbeitungsmodul (2), das für die Verwendung beim Herstellen von Getränkekapseln eines ersten Typs (5a) mit einer ersten Größe und Kapseln eines zweiten Typs (5b) mit einer zweiten Größe konzipiert ist; wobei die Maschine einen Positionierer (44) umfasst, der dafür konzipiert ist, eine Kapsel des ersten und des zweiten Typs zu halten, wobei die Getränkezubereitungsmaschine ferner eine Größenerfassungsanordnung (110, 120; 122a, 122b; 130) umfasst, die konfiguriert ist zum:
• Erkennen eines Vorhandenseins einer Kapsel in dem Positionierer;
• Bestimmen einer Größeninformation durch Differenzieren einer Größe der erfassten Kapsel und Vergleichen der differenzierten Größe mit der ersten und der zweiten Größe;
• Senden der Größeninformation an das Inhaltsstoffverarbeitungsmodul,
**dadurch gekennzeichnet, dass** das Inhaltsstoffverarbeitungsmodul Baugruppen (23, 24) umfasst, die derart konfiguriert sind, dass eine Kapsel des ersten oder des zweiten Typs in einer geöffneten Position eingesetzt werden kann, und derart, dass eine Brühkammer (39) in einer geschlossenen Position bereitgestellt wird, wobei das Inhaltsstoffverarbeitungsmodul dafür konfiguriert ist, die Konfiguration der Baugruppen und/oder der Brühkammer entsprechend der Größeninformation anzupassen.

2. Maschine nach Anspruch 1, wobei die Größenerfassungsanordung (110) dafür konfiguriert ist, das Vorhandensein einer Kapsel in dem Positionierer zu erkennen, indem erkannt wird, ob ein metallisches Objekt in dem Positionierer vorhanden ist.

3. Maschine nach Anspruch 1 oder 2, wobei die Größenerfassungsvorrichtung (110) eine induktive Erkennungsanordung umfasst, die dafür konfiguriert ist, das Vorhandensein einer Kapsel in dem Positionierer durch Erzeugen eines elektromagnetischen Feldes in dem Positionierer mit einem Erfassungselement (45a, 45b) und durch Erkennen von Änderungen des elektromagnetischen Feldes, die durch das Vorhandensein einer Kapsel des ersten oder des zweiten Typs induziert werden, zu erkennen.

4. Maschine nach einem der vorhergehenden Ansprüche, wobei die Größenerfassungsanordung (110) eine Längenerkennungseinheit (120) zum Bestimmen der Größeninformation umfasst, wobei die Längenerkennungseinheit eine lichtempfangende Vorrichtung und eine lichtemittierende Vorrichtung umfasst, die beide derart in dem Kapselpositionierer (40) positioniert sind, dass:
• ein Licht, das von der lichtemittierenden Vorrichtung emittiert wird, von einer Kapsel des zweiten Typs reflektiert wird, wenn eine derartige Kapsel in dem Positionierer (40) positioniert ist und von der lichtempfangenden Vorrichtung empfangen wird;
• ein Licht, das von der lichtemittierenden Vorrichtung emittiert wird, nicht von einer Kapsel des ersten Typs reflektiert wird, wenn eine derartige Kapsel in dem Positionierer (40) positioniert ist und/oder nicht von der lichtempfangenden Vorrichtung empfangen wird.

5. Maschine nach einem der vorhergehenden Ansprüche, wobei die Größenerfassungsanordnung (110) eine Größenerkennungsanordnung umfasst, die konfiguriert ist, um die Größeninformationen durch Bestimmen eines Profils und/oder einer Krümmung und/oder einer Form eines Teils einer Kapsel, die in dem Positionierer positioniert ist, zu bestimmen, unter Verwendung eines geometrischen Größenerfassungselements (130, 140a, 140b) zum Identifizieren, ob das Profil und/oder die Krümmung und/oder die Form einem Teil einer Kapsel des ersten Typs oder einem Teil einer Kapsel des zweiten Typs entsprechen.

6. Maschine nach einem der vorhergehenden Ansprüche, wobei die Größenerfassungsanordnung (110) eine induktive Größenerkennungsanordnung umfasst, die dafür konfiguriert ist, die Größeninformation durch Erzeugen eines elektromagnetisches Felds in dem Positionierer mit einem Größenerfassungselement (122a, 122b; 142, 140a, 140b) und durch Erkennen von Änderungen des elektromagnetischen Felds, die durch das Vorhandensein einer Kapsel des ersten oder des zweiten Typs induziert werden, und durch Identifizieren, ob die Änderungen durch eine Kapsel des ersten Typs oder durch eine Kapsel des zweiten Typs induziert werden.

7. Maschine nach Anspruch 6, wobei die induktive Größenerkennungsanordnung ein feldemittierendes Element (142) zum Erzeugen eines elektromagnetisches Felds in dem Positionierer, ein erstes feldempfangendes Element (140a) und ein zweites feldempfangendes Element (140b) umfasst, wobei die induktive Größenerkennungsanordnung dafür konfiguriert ist, die Größeninformationen durch Erzeugen eines elektromagnetischen Felds in dem Positionierer mit dem feldemittierenden Element (142) und durch Erkennen von Änderungen des elektromagnetischen Felds, die an dem ersten und dem zweiten feldempfangenden Element beobachtet und durch Vorhandensein einer Kapsel des ersten oder des zweiten Typs induziert werden, und durch Identifizieren, ob die Änderungen durch eine Kapsel des ersten Typs oder durch eine Kapsel des zweiten Typs induziert werden.

8. Maschine nach einem der vorhergehenden Ansprüche, wobei das Inhaltsstoffverarbeitungsmodul dafür konfiguriert ist, ein Getränk gemäß Parametern, die an die Größeninformation angepasst sind oder von diesen abhängig sind, zuzubereiten.

9. Maschine nach einem der vorhergehenden Ansprüche, wobei der Positionierer dafür konzipiert ist, eine Kapsel des ersten oder des zweiten Typs aus dem Inhaltsstoffverarbeitungsmodul zu halten, wobei die Maschine Übertragungsmittel umfasst, die dafür konfiguriert sind, die Kapsel zu dem Inhaltsstoffverarbeitungsmodul zu übertragen.

10. Verfahren zum Zubereiten eines Getränks in einer Getränkezubereitungsmaschine mit einem Inhaltsstoffverarbeitungsmodul (2), das zum Herstellen von Getränkekapseln eines ersten Typs (5a) mit einer ersten Größe und von Kapseln eines zweiten Typs (5b) mit einer zweiten Größe konzipiert ist; wobei die Maschine einen Positionierer (44) umfasst, der dafür konzipiert ist, eine Kapsel des ersten oder des zweiten Typs zu halten, wobei die Getränkezubereitungsmaschine ferner eine Größenerfassungsanordnung (110, 120; 122a, 122b; 130) umfasst,
wobei das Inhaltsstoffverarbeitungsmodul Baugruppen (23, 24) umfasst, die dafür konfiguriert sind, das Einsetzen einer Kapsel des ersten oder des zweiten Typs in eine geöffnete Position zu ermöglichen und eine Brühkammer (39) in einer geschlossenen Position bereitzustellen, wobei das Inhaltsstoffverarbeitungsmodul dafür konfiguriert ist, die Konfiguration der Baugruppen und/oder der Brühkammer gemäß der Größeninformation anzupassen,
wobei das Verfahren die folgenden Schritte umfasst:
• Erkennen eines Vorhandenseins einer Kapsel in dem Positionierer;
• Bestimmen einer Größeninformation durch Messen einer Größe der erkannten Kapsel und Vergleichen der gemessenen Größe mit der ersten und der zweiten Größe;
• Senden der Größeninformation an das Inhaltsstoffverarbeitungsmodul;
• Anpassen der Konfiguration der Baugruppen und/oder der Brühkammer entsprechend der Größen information.

11. Verwendung einer Kapsel eines ersten Typs (5a) mit einer ersten Größe und/oder einer Kapsel eines zweiten Typs (5b) mit einer zweiten Größe mit einer Getränkezubereitungsmaschine nach einem der Ansprüche 1 bis 9 zum Zubereiten eines Getränks.

12. Kit, umfassend eine Kapsel eines ersten Typs (5a) mit einer ersten Größe und/oder eine Kapsel eines zweiten Typs (5b) mit einer zweiten Größe, und Getränkezubereitungsmaschine nach einem der Ansprüche 1 bis 9.

## Revendications

1. Machine de préparation de boissons ayant un module de traitement d'ingrédient (2) conçu pour utiliser, dans le but de préparer des boissons, des capsules d'un premier type (5a) ayant une première taille et des capsules d'un second type (5b) ayant une seconde taille ; ladite machine comprenant un dispositif de positionnement (44) conçu pour contenir une capsule du premier et du second type, la machine de préparation de boissons comprenant en outre un agencement de détection de taille (110, 120 ; 122a, 122b ; 130) configuré pour :
• détecter la présence d'une capsule dans le dispositif de positionnement ;
• déterminer une information de taille par différenciation d'une taille de ladite capsule détectée et comparaison de ladite taille différenciée à la première et la deuxième taille ;
• envoyer l'information de taille au module de traitement d'ingrédient,
**caractérisée en ce que** le module de traitement d'ingrédient comprend des ensembles (23, 24) conçus pour permettre l'insertion d'une capsule du premier ou du second type dans une position ouverte et pour fournir une chambre d'infusion (39) dans une position fermée, le module de traitement d'ingrédient étant conçu pour adapter la configuration des ensembles et/ou de la chambre d'infusion en fonction de l'information de taille.

2. Machine selon la revendication 1, dans laquelle l'agencement de détection de taille (110) est conçu pour détecter la présence d'une capsule dans le dispositif de positionnement en détectant si un objet métallique est présent dans le dispositif de positionnement.

3. Machine selon la revendication 1 ou 2, dans laquelle l'agencement de détection de taille (110) comprend un agencement de détection inductif conçu pour détecter la présence d'une capsule dans le dispositif de positionnement en produisant avec un élément de détection (45a, 45b) un champ électromagnétique magnétique dans le dispositif de positionnement et en détectant des variations dudit champ électromagnétique induites par la présence d'une capsule du premier ou du second type.

4. Machine selon l'une quelconque des revendications précédentes, dans laquelle l'agencement de détection de taille (110) comprend une unité de détection de longueur (120) pour déterminer l'information de taille, l'unité de détection de longueur comprenant un dispositif de réception de lumière et un dispositif d'émission de lumière, l'un et l'autre positionnés dans le dispositif de positionnement de capsule (40) de sorte que :
• une lumière, émise par le dispositif d'émission de lumière, est réfléchie par une capsule du second type lorsqu'une telle capsule est positionnée dans le dispositif de positionnement (40) et est reçue par le dispositif de réception de lumière ;
• une lumière, émise par le dispositif d'émission de lumière, n'est pas réfléchie par une capsule du premier type lorsqu'une telle capsule est positionnée dans le dispositif de positionnement (40) et/ou n'est pas reçue par le dispositif de réception de lumière.

5. Machine selon l'une quelconque des revendications précédentes, dans laquelle l'agencement de détection de taille (110) comprend un agencement de détection de taille, conçu pour déterminer l'information de taille en déterminant un profil et/ou une courbure et/ou une forme d'une partie d'une capsule positionnée dans le dispositif de positionnement, en utilisant un élément de détection de taille géométrique (130, 140a, 140b) pour identifier si ledit profil et/ou ladite courbure et/ou ladite forme correspond(ent) à une partie d'une capsule du premier type ou à une partie d'une capsule du second type.

6. Machine selon l'une quelconque des revendications précédentes, dans laquelle l'agencement de détection de taille (110) comprend un agencement de détection de taille inductif, conçu pour déterminer l'information de taille en produisant avec un élément de détection de taille (122a, 122b ; 142, 140a, 140b) un champ électromagnétique dans le dispositif de positionnement et en détectant des variations dudit champ électromagnétique induites par la présence d'une capsule du premier ou du second type et en identifiant si lesdites variations sont induites par une capsule du premier type ou par une capsule du second type.

7. Machine selon la revendication 6, dans laquelle l'agencement de détection de taille inductif comprend un élément émetteur de champ (142) pour produire un champ électromagnétique dans le dispositif de positionnement et un premier élément de réception de champ (140a) et un second élément de réception de champ (140b), l'agencement de détection de taille inductif étant conçu pour déterminer l'information de taille en produisant, avec l'élément émetteur de champ (142), un champ électromagnétique dans le dispositif de positionnement et en détectant des variations dudit champ électromagnétique observées sur le premier et le second élément de réception de champ, induites par la présence d'une capsule du premier ou du second type et en identifiant si lesdites variations sont induites par une capsule du premier type ou par une capsule du second type.

8. Machine selon l'une quelconque des revendications précédentes, dans laquelle le module de traitement d'ingrédient est conçu pour préparer une boisson selon des paramètres adaptés à l'information de taille ou en fonction de celle-ci.

9. Machine selon l'une quelconque des revendications précédentes, dans laquelle le dispositif de positionnement est conçu pour maintenir une capsule du premier ou du second type hors du module de traitement d'ingrédient, la machine comprenant des moyens de transfert conçus pour transférer la capsule au module de traitement d'ingrédient.

10. Procédé de préparation d'une boisson dans une machine de préparation de boissons ayant un module de traitement d'ingrédient (2) conçu pour utiliser, dans le but de préparer des boissons, des capsules d'un premier type (5a) ayant une première taille et des capsules d'un second type (5b) ayant une seconde taille ; ladite machine comprenant un dispositif de positionnement (44) conçu pour contenir une capsule du premier ou du second type, la machine de préparation de boissons comprenant en outre un agencement de détection de taille (110, 120 ; 122a, 122b ; 130),
dans lequel le module de traitement d'ingrédient comprend des ensembles (23, 24) conçus pour permettre l'insertion d'une capsule du premier ou du second type dans une position ouverte et pour fournir une chambre d'infusion (39) dans une position fermée, le module de traitement d'ingrédient étant conçu pour adapter la configuration des ensembles et/ou de la chambre d'infusion en fonction de l'information de taille,
dans lequel le procédé comprend les étapes suivantes :
• détecter la présence d'une capsule dans le dispositif de positionnement ;
• déterminer une information de taille par mesure d'une taille de ladite capsule détectée et comparaison de ladite taille mesurée à la première et la deuxième taille ;
• envoyer l'information de taille au module de traitement d'ingrédient ;
• adapter la configuration des ensembles et/ou de la chambre d'infusion en fonction de l'information de taille.

11. Utilisation d'une capsule d'un premier type (5a) ayant une première taille et/ou d'une capsule d'un second type (5b) ayant une seconde taille avec une machine de préparation de boissons selon l'une quelconque des revendications 1 à 9 pour la préparation d'une boisson.

12. Kit comprenant une capsule d'un premier type (5a) ayant une première taille et/ou une capsule d'un second type (5b) ayant une seconde taille et une machine de préparation de boissons selon l'une quelconque des revendications 1 à 9.
